# EUROPEAN PATENT APPLICATION

(11) **EP 2 068 008 A1**
(43) Date of publication of application: **10.06.2009**
(21) Application number: 08170512.1
(22) Date of filing: 02.12.2008
(51) Int. Cl.: F16B 12/20

(54) **Fixing base for furniture accessories**

(30) Priority: 03.12.2007 IT MI20072265
(71) Applicant: Agostino Ferrari S.p.A., 24122 Bergamo BG (IT)
(72) Inventor: Migli, Carlo, 23900 Lecco LC (IT)
(74) Representative: Faraggiana, Vittorio

(57) **Abstract**

A fixing base for furniture accessories comprises a base body (11) that is intended to be fixed to a furniture surface by a mounting surface (12) thereof. A tongue (13), is intended to rest at a corner of the surface of the piece of furniture and a tooth (14), that faces the tongue, is intended to be inserted into a hole on the surface of the piece of furniture. A hooking lever (16) is rotatable on the base body from an unhooking position to a hooking position controlling means (15, 21, 22) for moving tooth and tongue towards one another to cause the tooth to engage in the wall of the hole with a reaction on the tongue resting on the corner of the piece of furniture.

## Description

The present invention relates to an innovative fixing base for furniture accessories.

Modern furniture-making technology provides for accessories of various types such as hinges, guides for drawers, shock absorbers, pull-push mechanisms, buffers, etc being able to be fitted on the side of a container. These accessories are mostly positioned using drilling systems with standard measures and fixed with screws directly on the wood of the side.

In order to mount these accessories, a quick-fixing system is often desired. However, usually screw and/or expanding plugs are used that require a certain time for mounting and the use of suitable tools. In order to avoid the use of tools, systems have been proposed that use plugs that expand through the action of a cam moved by the rotation of a suitable control lever that is operatable by hand.

However, it is also often desired for the accessory to be easily removed whenever necessary, for example to reposition the accessory at another hole of a series of standard holes found inside the side of the piece of furniture. However, removing a screw-mounted and/or expanding plug mounted accessory leaves the original hole in view with the spoilt edges. It not only becomes difficult to ensure a future solid fixing in the hole, but the aesthetic appeal is in any case compromised, as the spoilt hole clearly stands out inside the piece of furniture. Further, in the case of expanding plugs, the plug that is removed is normally deformed and hardly reusable.

A further added feature is that of having stable and tough hooking also for those accessories that are intended to receive heavy blows during use, such as the accessories used to control the movement of other furniture elements such as buffers, pull-pushes and shock absorbers. However, this conflicts with the desire for a rapid, simple system that does not ruin the hooking system. The systems that have been proposed until now are not even satisfactory.

The general object of the present invention is to overcome the aforesaid drawbacks by providing a fixing base for furniture accessories that is easy and fast to mount and dismount without the use of tools, enables repositioning without problems and provides satisfactory hooking safety.

In view of this object, it was decided to devise, according to the invention, a fixing base for furniture accessories, comprising a base body intended to be connected to a surface of the piece of furniture by a mounting surface thereof from which there protrudes a tongue, intended for resting at an edge of the surface of the piece of furniture and at least a tooth that faces the tongue and is intended to be inserted into a hole on said surface of the piece of furniture, a hooking lever being rotatable on the base body from an unhooking position to a hooking position controlling means for moving tooth and tongue towards one another to cause the tooth to engage in the hole wall with a reaction on the tongue resting on the corner of the piece of furniture.

In order to make clearer the innovative principles of the present invention and the advantages thereof over the known prior art, a possible embodiment applying such principles will be disclosed below with the help of the attached drawings. In the drawings:
- figure 1 is a perspective view of a fixing base made according to the principles of the invention;
- figure 2 is a partially sectioned lateral view of the base of figure 1;
- figures 3 and 4 are lateral views of the part of the base of figure 1 positioned on a piece of furniture, before and after engagement;
- figure 5 is a view of an accessory provided with the base according to the invention.

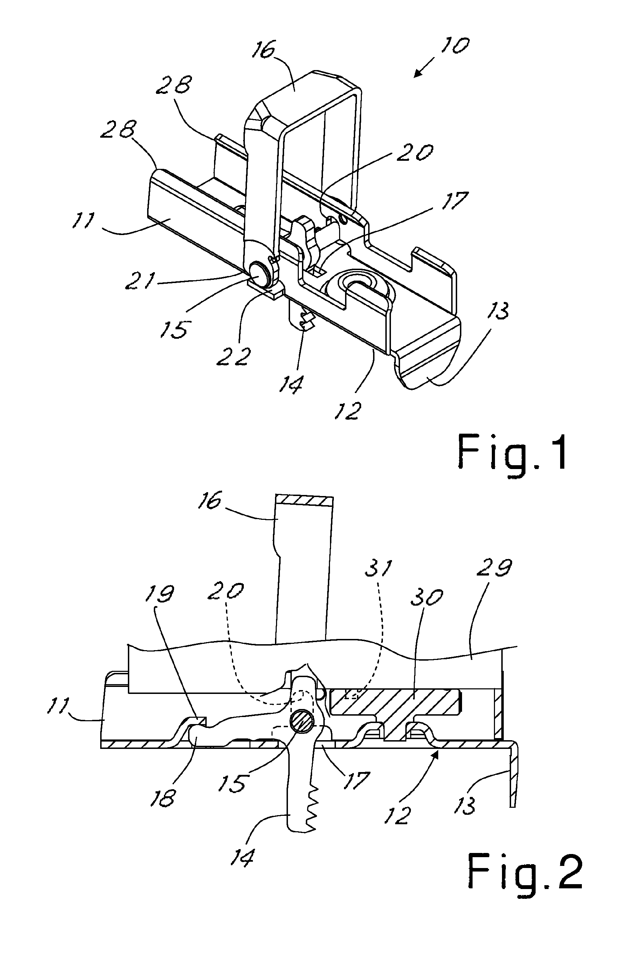

With reference to the figures, in figure 1 there is shown a fixing base, generally indicated by 10, made according to the invention.

The device comprises a base body 11 that is preferably made of metal and has a mounting surface 12 intended for resting on the fixing wall on the piece of furniture.

From the surface 12 there protrude an abutting tongue 13 and an engaging tooth 14, that face one another and are generally parallel. The tooth 14 is supported on the body by means of a pivot 15 and is a piece of furniture between a resting position and an engaging position by means of the activation of an operating lever 16. Advantageously, the tooth 14 has an edge facing the tongue 13 that is deeply serrated. Moving means for moving the tooth and tongue together is controlled by the lever 16.

As can also be seen clearly in figure 2, in the embodiment shown the tooth 14 protrudes from the surface 12 through a groove 17 of the body 11 and, inside the base, it is connected to the lever 16 by means of the pivot 15. The tooth is free to rotate in relation to the pivot and has a square arm 19 that protrudes parallel to the surface 12 and in the direction opposite the tongue 13. The end of the arm 18 is connected to be able to slide towards and away from the tongue 13 with the possibility of slight rotation but without moving away from the mounting surface 12. For this purpose, the end of the arm 18 rests under a surface 19, advantageously obtained from a monoblock in the base.

The pivot 15 is constrained to slide transversely to the axis thereof along guide grooves 20 in the base in a normal direction to the mounting surface 12.

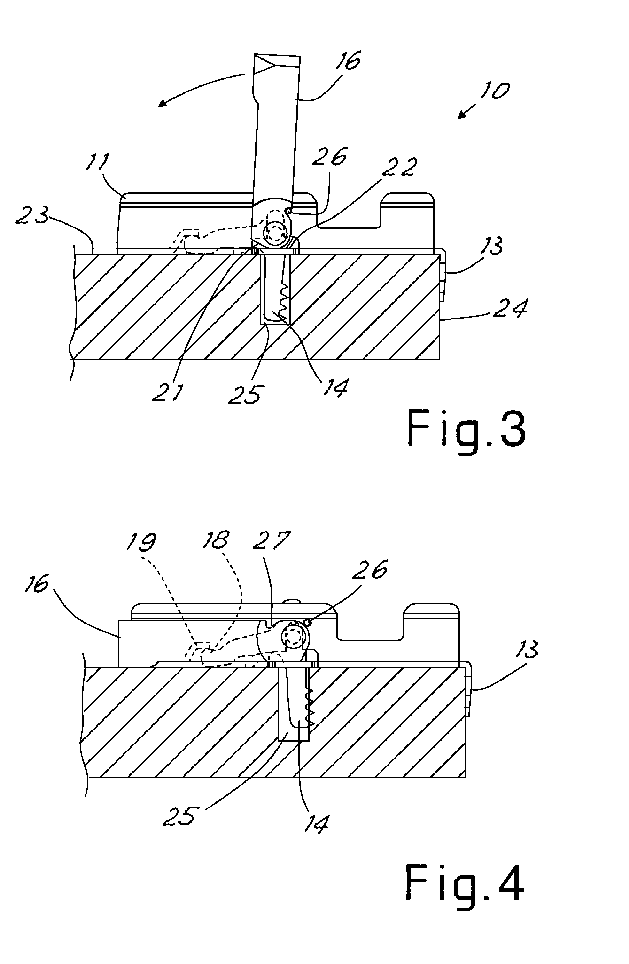

The lever 16, which is advantageously U-shaped, is mounted at the ends of the pivot to rotate from the unhooking position of figure 3 (advantageously raised normal to the mounting surface 12) to the hooking position of figure 4 (advantageously lowered parallel to the mounting surface and in a direction behind the base). Each pivoted end of the lever defines a cam 21 that works against a surface 22 on the base. The two surfaces 22 are advantageously formed by flaps protruding laterally from the body 11.

As can be clearly seen from the comparison with figures 3 and 4, the cams 21 are shaped eccentrically to the pivot 15 to cause the pivot to slide along the grooves 20 to the movement of the lever between the raised position of figure 3 and the lowered position of figure 4. The movement of the pivot (upwards in figures 3 and 4) combined with the support of the end of the square arm 18 against the surface 19 causes the tooth 14 to rotate towards the tongue 13 combined with a movement of retraction of the tooth 14 into the surface 12.

It is clear from the drawings how the opposition movement between the tooth 14, driven by the lever 16, and the tongue 13 enables the device 10 to be fixed solidly to the surface 23 of a piece of furniture near a corner 24 and by exploiting a hole 25.

The positioning of the tooth 14 on the base is dimensioned in such a way that when the lever 16 starts operation, placing itself in the engaging position (figure 4), the distance between the tongue 13 and the serrated edge of the tooth is less than the distance between the hole 25 and the front edge of the side 23 of the piece of furniture.

In this manner, activation of the lever 16 entails movement of the tooth until it is made to bite the wall of the hole 25 with the serrated edge, reacting with the tongue 13. The retraction movement of the tooth (upwards in figure 4) contributes at the same time to making the base adhere to the surface 23 making the fixing solid and free of clearance.

In order to disconnect the body 11 from the piece of furniture it will be sufficient to return the lever 16 to the initial position, freeing the tooth 14. Advantageously, when the lever is raised to the resting position, locking means prevents the pivot sliding, owing to traction on the lever. This is advantageously obtained with lateral protrusions 26 on the base body that are housed in corresponding grooves 27 in the end of the lever, preventing upward traction on the lever taking the tooth 14 to the clamping position without rotating the lever. This also enables the lever to be used as a handle for removing the device. Advantageously, the grooves 27 have an inlet for the protrusions 26 that is shaped to push the pivot 15 actively into the start position and ensure the return movement of the tooth 14 to the resting position. As can be clearly seen in figure 4, the protrusions 26 can also be positioned so as to slide on the cam surface of the lever for the entire movement of the lever between the hooking and the resting position, so that the movement of the pivot is firmly guided in both directions along the grooves 20.

At this point it is clear how the preset objects have been achieved. The snapping operation is rapid and the fixing has excellent solidity, especially in cases in which accessories receive frontal blows (with direct force substantially parallel to the mounting surface) such as, for example, shock absorbers or push-pulls. The presence of the reaction tongue 13 on the edge 24 of the surface 23 makes fixing substantially insensitive to the thrust forces directed inside the piece of furniture. Further, the gripping movement inside the hole ensures that the edge of the hole remains whole. The device can thus be removed without leaving a trace and be repositioned as many times as desired. The device can be dimensioned so as to adapt to a standard system for drilling the sides, like the 37x32 and 28x32 systems that are used by most furniture manufacturers for fixing accessories.

By providing an abutting surface consisting of the tongue 13 that rests on the outside of the front edge of the piece of furniture, the tolerances of the drilling and fixing system are made insignificant and positioning is more accurate. This is very advantageous, especially in the case of accessories that have to interact with a door or a drawer that closes by abutting on the outer edge of the side.

Advantageously, the base body 11 can be made of U-shaped sheet metal to make a pair of side rails 28 extending parallel to the main axis of the base to enable an accessory to slide backwards and forwards in a controlled manner that engages this base, shown schematically by shown schematically by 29 in figure 2. As can be seen in figure 2, advantageously there is a wheel 30 that is connected to rotate on the base 11, protruding laterally from the base for the manual control thereof. The wheel engages an eccentric cam pivot 31 that protrudes below the accessory so that, by rotating the wheel, the forward/backward position of the accessory in relation to the mounting side 24 in the piece of furniture is adjusted.

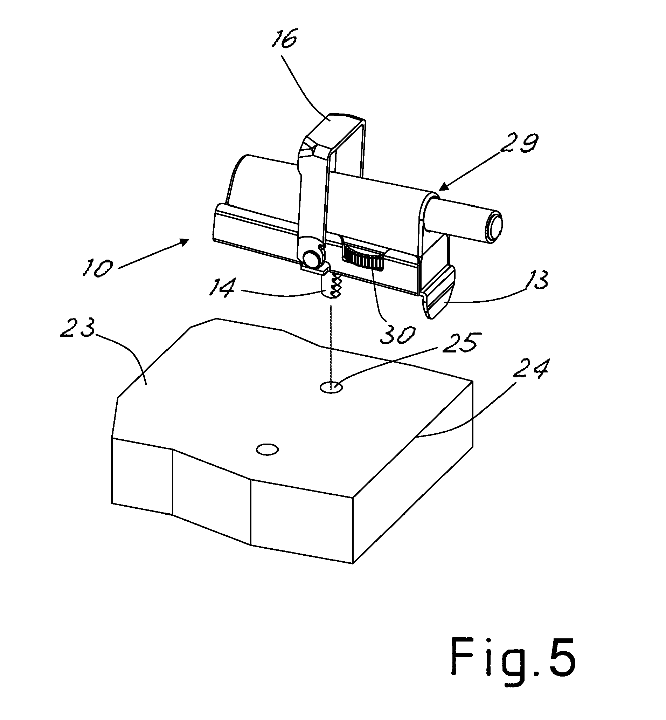

In figure 5 there is shown an embodiment, with the device according to the invention used for mounting, on a side 23 of a piece of furniture, a shock absorber 29 (which is known and is not therefore further shown or disclosed) commonly used for anti-shock closing of parts of furniture. The device is provided with the aforesaid adjusting system with the operating wheel 30.

Naturally, the above description of an embodiment applying the innovative principles of the present invention is given by way of example of such innovative principles and must not therefore be taken to limit the scope of what is claimed herein.

For example, as easily imaginable by those skilled in the art, the form of the fixing base may vary according to the specific application and the type of accessory to be mounted. The base can also be made integral with the accessory. The body, can, for example, be made of bent sheet metal, as shown, or can be made molded or in another manner. Depending on the specific application, also the shape and arrangement of the operating lever can be different from those shown. If an upper seal is required, two or more fixing teeth could be used that are inserted inside holes made parallel to the front edge of the side. The teeth can be operated by a single lever or each tooth can be operated by a dedicated lever. Although the lever movement disclosed has been found to be particularly advantageous in terms of toughness, practicality and cost, other operating means for moving the tooth can easily be imagined by those skilled in the art in the light of the above description to control the moving of the tooth towards the tongue 13 and, possibly, to pull the tooth inside the resting surface of the base. Naturally, as easily imaginable by those skilled in the art, the resting surface 12 can be made for only partial resting with the piece of furniture (for example by means of feet or raised edges).

Alternatively to the deep serration of the tooth, which is suitable for penetrating relatively soft materials such as wood, it is possible to make the tooth with a surface covered with a suitable yielding material (for example rubber or similar) to have a fixture in the hole by friction rather than interference. This is useful in particular in the case of a hole made inside a very stiff material.

## Claims

1. Fixing base for furniture accessories, comprising a base body (11) intended to be connected to a surface of the piece of furniture by a mounting surface thereof (12) from which there protrudes a tongue (13), intended for resting at a corner of the surface of the piece of furniture and at least a tooth (14) that faces the tongue and is intended to be inserted into a hole on said surface of the piece of furniture, a hooking lever (16) being rotatable on the base body from an unhooking position to a hooking position controlling means (15, 21, 22) to move tooth and tongue towards one another to cause the tooth to engage in the hole wall with a reaction on the tongue resting on the corner of the piece of furniture.

2. Base according to claim 1, **characterized in that** the movement moving the tooth and tongue towards one another occurs by tilting the tooth in relation to the tongue.

3. Base according to claim 1, **characterized in that** the moving towards is combined with a retraction movement of the tooth into the mounting surface.

4. Base according to claim 3, **characterized in that** the moving towards means comprises a pivot (15) with an axis that is transverse to said moving towards direction and supports the tooth (14) inside the base body, and sliding cam means (21, 22) of the pivot for sliding in a direction that is substantially normal to the mounting surface and is kinematically connected to the hooking lever (16) for the operation thereof, the tooth (14) comprising a square arm (18) that has a fixed end so as to make the tooth tilt around the pivot at said sliding of the pivot.

5. Base according to claim 4, **characterized in that** the lever (16) is U-shaped with the ends of the two arms of the U that are pivoted on the pivot (15) on two sides of the tooth (14) and the cam means comprises two cam surfaces (21) that are made on the two pivoted ends of the lever.

6. Base according to claim 4, **characterized in that** the sliding of the pivot (15) is guided at the ends by two guide grooves (20) in the body.

7. Base according to claims 5 and 6, **characterized in that** the pivot (15) protrudes from the body through the guide grooves (20) to support the two pivoted ends of the lever.

8. Base according to claim 1, **characterized in that** in the unhooking position the lever (16) is raised in a direction substantially normal to the mounting surface, whilst in the hooking position it is lowered substantially parallel to the mounting surface.

9. Base according to claim 4, **characterized in that** in the unhooking position the lever engages locking means that prevents sliding of the pivot (15) owing to traction on the lever (16) in the direction of extraction of the tooth from the hole.

10. Base according to claim 1, **characterized in that** the tooth (14) has an edge facing the tongue that is serrated to bite the wall of the hole.
